Europäisches Patentamt

European Patent Office

Office européen des brevets

(19)

(11) Numéro de publication: **0 022 094**

**A1**

(12)

# DEMANDE DE BREVET EUROPEEN

(21) Numéro de dépôt: **80830039.6**

(22) Date de dépôt: **27.06.80**

(51) Int. Cl.³: **A 47 J 31/40**

(30) Priorité: **02.07.79 IT 8340979**

(43) Date de publication de la demande:
**07.01.81 Bulletin 81/1**

(84) Etats Contractants Désignés:
· **AT BE CH DE FR GB LI LU NL SE**

(71) Demandeur: **LA SAN MARCO S.p.A.**
**n. 41 via Cotonificio**
**I-33100 Udine(IT)**

(72) Inventeur: **Zanessi, Manlio**
**Via P.R. Giuliani (condominio Giucama)**
**I-33100 Udine(IT)**

(74) Mandataire: **D'Agostini, Giovanni, Dr.**
**n. 17 via G.Giusti**
**I-33100 Udine(IT)**

(54) **Percolateur avec système de distribution en continu ou dosée.**

(57) La machine à café express comprend:
une alimentation d'eau mise sous pression par une pompe (2), un doseur d'eau à cylindre hydraulique (4) avec piston à double-effet (5) une soupape électrique à deux voies (10) un échangeur de chaleur (11), une soupape à trois voies (12), un conduit de déchargement (13) et un distributeur (14) de café pouvant à l'aide de moyens de commande (7,8,9) et de soupapes électriques (10,12), débiter ou choix un flux continu ou en quantités dosées.

Fig. 1.

EP 0 022 094 A1

— 1 —

Percolateur avec système de distribution en continu ou dosée.

L'invention concerne un percolateur du type de la machine à café express avec système de distribution en continu ou dosée de café.

Dans l'état de la technique actuelle existent plusieurs systèmes de distribution de café dans les percolateurs, lesquels comportent l'emploi ou de mécanismes assez compliqués ou un grand nombre de soupapes électriques et compteurs liés à dispositifs de commande électriques.

La présente invention a pour but d'apporter une simplification de la distribution du café avec l'utilisation de deux seules soupapes électriques.

Selon l'invention le percolateur avec système de distribution en continu ou dosé de café est du type comprenant au moins: une alimentation d'eau sous pression par un pompe, un doseur d'eau à cylindre hydraulique avec piston a double effet fonctionnant à poussée différentielle des deux chambres (une à tige et l'opposée de dosage), un échangeur de chaleur et un distributeur de café liés par une conduite de refoulement d'eau;

caractérisé en ce que la conduite de refoulement d'eau sous pression avec la dite pompe, communique directement avec la dite chambre à tige et inderectement, par l'intermediation d'une soupape électrique à deux voies normalement ouvertes, avec la chambre opposée de dosage du cylindre hydraulique doseur, étant prévu que en aval de la dite soupape électrique à deux voies, on a un branchement de tuyau qui porte au dit distributeur du café en passant par l'échangeur de chaleur et par une soupape électrique à trois voies avec voie sur le distributeur normalement coupée et une voie de dechargement en communication avec le distributeur, étant prévu des moyens de commande électriques liés à la position du piston du cylindre doseur et avec d'autres manuels et sur programme, structurés en manière telle que:

- en répos, le système est dans la condition énoncé, la dite pompe est arrêtée  et le volume de la dite chambre à tige est minimum, tandis que l'échangeur de chaleur est toujours en marche;

- pour la distribution dosée, on commande le start  de la pompe avec inversion des deux soupapes électriques en coupant la communication entre les deux chambres du cylindre doseur et ouvrant la communication entre la chambre de dosage et le distributeur, à travers l'échangeur de chaleur et la dite soupape à trois voies qui coupe dans le même temps le dechargement;

- aprés la distribution, tandis que la pompe est en marche, on commande l'inversion de nouveau des deux soupapes électriques, ce qui permet, par la poussée differentielle des deux chambres du cylindre hydraulique doseur, le rechargement de la chambre de dosage avec l'eau provenant aussi de la chambre opposée à tige jusq'au remplissement complet et arrêt  de la pompe.

Dans ce qui suit, l'invention est exposée plus en détail à

0022094

l'aide de dessins représentant seulement un mode d'execution.

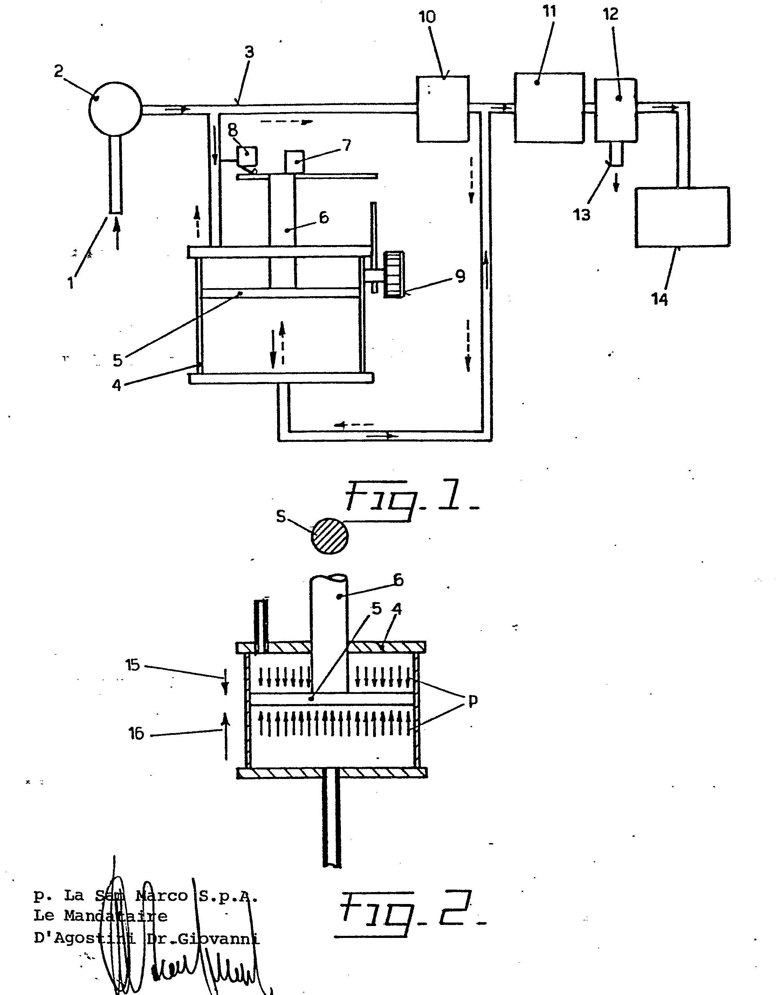

La figure 1 représente, schématiquement le système de distribution; la fig.2 représente, en vue partielle en section axiale,le cylindre doseur differentiel.

Selon l'invention e conformement à ce mode de réalisation re présenté dans les figures, le système de distribution est con stitué et fonctionne avec une pompe hydraulique 2 à commande électrique sur programme et manuel pour le 'start 2 qui aspire l'eau de l'alimentation 1 en la refoulant dans la con duite 3 qui porte l'eau dans l'intérieur du cylindre doseur 4 avec piston à tenue 5, dans la chambre à tige 6 . L'autre chambre opposée du dosage du cylindre est déjà remplie d'eau par l'intermediaire de la soupape électrique à deux voies 10 qui est ouverte, tandis que la soupape à trois voies 12 coupe la voie provenant du échangeur de chaleur 11 et met en communication le distributeur 14 avec le déchargement 13. Dans cette condition la tige 6 du cylindre doseur 4 maintent ouvert le contact électrique du rélé 8 lié électriquement à la pompe 2.

Pour obtenir la distribution dosée, vient excité un rélé (pas illustré dans les figures) lequel avec ses contacts commande le start de la pompe 2 et commute les soupapes électriques 10 et 12.

La soupape électrique 10 empêche à l'eau de passer dans la chambre inférieure de dosage du cylindre doseur, tandis que la soupape électrique 12 coupe le dechargement et ouvre le passage de l'eau à travers l'échangeur de chaleur vers le group de distribution 14.

Pendant cette phase la tige 6 et le rélé 7 solidaire avec le piston descendent jusq'au moment   où le rescontre du régleur 9 (celui-ci peut être à camme)  · coupe le contact du rélé désexcitant les soupapes électriques 10 et 12).

La pompe reste toujours en marche par le contact d'alimentation du rélé 8 en permettant le rétablissement des conditions du repos lors du départ.

En effet  la soupape électrique 10 désexcitée, met de nouveau en communication les deux chambres du cylindre 4 séparées par le piston 5 sur les surfaces opposées duquel vient exercitée la même pression par la pompe 2, tandis que la soupape électri que 12 désexcitée se porte dans la condition de répos du dé part en coupant la conduite qui porte, à travers l'échangeur de chaleur 11, au distributeur 14.

Se référant à la figure 2 résulte évident que la pression "p" vient exercitée sur une portion de surface plus pétite du cô té de la tige 6 par rapport à la surface inférieure opposée. La différence de surface est l'aire "S" de la section de la tige 6, célà comporte une poussée differentielle vers l'haut de F = Sxp, c'est à dire une force 16 plus grande de 15.

Le piston pourtant commence à monter et envoie l'eau de la chambre à tige supérieure, à travers la soupape 10, dans la chambre de dosage inférieure du cylindre (opération de récupé ration de l'eau du même cylindre) comme l'on peut voir dans la représentation  de figure 1 par les flèches en traits. Lorsque le piston aboutit dans le point mort supérieur, la tige 6 coupe le contact du rélé 8 qui arrête la pompe 2.

Udine, le 10 Juillet 1980

p. La San Marco S.p.A.

Le Mandataire: D'Agostini Dr. Giovanni

Ü022094

Revendications de brevet

1. Percolateur ou machine à café express, avec système de distribution en continu ou dosée de café, du type comprenant au moins: une alimentation d'eau sous pression (3) par une pompe (2), un doseur d'eau à cylindre hydraulique (4) avec piston à double effet (5) fonctionnant à poussée differentielle des ses deux chambres opposées, une à tige (15) et l'autre opposée de dosage (16), un échangeur de chaleur (11), et un distributeur de café (14), liés par une conduite de réfoulement d'eau; caractérisé en ce que la conduite de réfoulement d'eau sous pression (3) avec la dite pompe (2), communique directement avec la dite chambre à tige (15) et indirectement, par l'intermediation d'une soupape électrique à deux voies normalement ouvertes (10), avec la dite chambre opposée de dosage (16) du cylindre doseur (4), étant prévu que en aval de la dite soupape électrique à deux voies (10), on a un branchement de tuyau qui porte au dit distributeur (14) du café, en passant par l'échangeur de chaleur (11) et par une soupape électrique à trois voies (12) avec voie sur le distributeur (14) normalement coupée et une voie de dechargement (13) en communication avec le distributeur (14), étant prévu des moyens de commande électriques (7,8) liés à la position du piston (5) du cylindre doseur (4) et avec d'autres manuels et sur programme, structurés en manière telle que:

a) en répos, le système est dans la condition énoncée, la dite pompe (2) est arrêtée et le volume de la dite chambre à tige (15) est minimum, tandis que l'échangeur de chaleur (11) est toujours en marche;

b) pour la distribution dosée, on commande le start de la pompe (2) avec inversion des deux soupapes électriques (10,12) en coupant la communication entre les deux chambres (15,16) du cylindre doseur (4) et ouvrant la communication entre la chambre de dosage (16) et le distributeur (14), à travers l'échangeur de chaleur (11) et la dite soupape à trois voies (12) qui coupe, dans le même temps, le dechargement (13);

c) aprés la distribution, tandis que la pompe (2) continue a être en marche, on commande l'inversion de nouveau des deux soupapes électriques (10,12) ce qui permet, par la poussée differentielle des deux chambres (15,16) du cylindre hydraulique doseur (4), le rechargement de la chambre de dosage (16) avec l'eau provenant aussi de la chambre opposée à tige (15) jusqu'à remplissement complet et arrêt de la pompe (2).

2. Machine selon 1, caractériséeen ce que le piston (5) du dit cylindre doseur (4) est réglable dans son course par l'intermediation d'un regleur de course (9) lequel est lié à un dispositif électrique (7) qui intervient dans le cycle opératif b) de la revendication précédente pour varier la course de distribution en dosage du piston (5) dans le cylindre (4).

3. Machine selon 1 et 2, caractérisée en ce qu'elle comprend aussi ultérieurs moyens de commande électriques structurés en manière telle d'être capables de commander la pompe (2), en la faisant partir, en variante, agissant seulement sur la dité soupape électrique à trois voies (12) ouvrant le passage de l'eau sur le distributeur (14) et permettant, pour cela, de réaliser une distribution en continu pour une quantité à plaisir de café avec l'eau refoulée directement par la pompe (2) de l'alimentation (1).

Udine, le 10 Juillet 1980

p. La San Marco S.p.A.
Le Mandataire:
D'Agostini Dr.Giovanni

0022094

1|1

Fig. 1

Fig. 2

0022094

Office européen
des brevets

**RAPPORT DE RECHERCHE EUROPEENNE**

Numero de la demande

EP 80 83 0039

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| | FR - A - 1 463 621 (VALENTE) <br> * Page 3, figure 1 * <br> -- | 1,2,3 | A 47 J 31/40 |
| | AT - B - 330 394 (MIKLOS) <br> * En totalité * <br> -- | 1,2 | |
| | FR - A - 2 224 744 (SCAPOLLA S.P.A) <br> * En totalité * <br> -- | 1,2 | |
| | FR - A - 2 234 881 (CIMBALI) <br> * En totalité * <br> -- | 1,2,3 | **DOMAINES TECHNIQUES RECHERCHES (Int. Cl. ³)** <br> A 47 J |
| | FR - A - 2 166 339 (BREVETTI GAGGIA S.P.A.) <br> * En totalité * <br> ---- | 1,2,3 | |

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 02-10-1980 | SCHARTZ |